# EUROPEAN PATENT APPLICATION

(11) **EP 2 381 689 A2**
(43) Date of publication of application: **26.10.2011**
(21) Application number: 10187921.1
(22) Date of filing: 18.10.2010
(51) Int. Cl.: H04N 13/00

(54) **2D/3D switchable shutter glasses for stereoscopic image display system**

(30) Priority: 19.04.2010 KR 20100035865
(71) Applicant: Samsung Electronics Co., Ltd., Gyeonggi-do 442-742 (KR)
(72) Inventor: Kim, Tae-hoon, Gyeonggi-do (KR); Pankaj, Agarwal, Gyeonggi-do (KR)
(74) Representative: Robinson, Ian Michael

(57) **Abstract**

Disclosed are shutter 3D spectacles which are used for a display apparatus displaying a left eye image and a right eye image alternately, the shutter 3D spectacles including a left eye shutter and a right eye shutter which are open and closed; a signal receiver which receives a synchronization signal from the display apparatus to operate the left eye shutter and the right eye shutter; and a controller which opens and closes the left eye shutter and the right eye shutter based on the synchronization signal, and the controller controlling the left eye shutter and the right eye shutter to operate the 3D spectacles in one of a 2D mode and a 3D mode. The shutter 3D spectacles operates selectively in a 2D mode and a 3D mode and provides a 2D image for a user even when a 3D image is being displayed.

## Description

### BACKGROUND

### 1. Field

Apparatuses and methods consistent with the exemplary embodiments relate to a display system, shutter 3D spectacles and a driving method thereof, and more particularly, to a display system, shutter 3D spectacles and a driving method thereof which provides a desired image.

### 2. Description of the Related Art

A three-dimensional (3D) image which is displayed on a display apparatus such as a TV enables a viewer to feel the 3D effect through binocular parallax which is the largest factor for a viewer to feel the 3D effect from a short distance. A 3D image can be viewed by shutter 3D spectacles. A display apparatus alternately displays a left eye image and a right eye image and opens and closes the shutter 3D spectacles to synchronize the left eye image and the right eye image to thereby realize the 3D image. That is, when a left eye image is displayed on the display apparatus, a left eye shutter is open and a right eye shutter of the 3D spectacles is closed. On the contrary, when a right eye image is displayed on the display apparatus, a right shutter is open and a left shutter of the 3D spectacles is closed.

Even if a user desires to view a two-dimensional (2D) image while viewing a 3D image or if a part of a plurality of users desires to view a 2D image while the plurality of users views a 3D image, both the 3D image and the 2D image are difficult to be displayed simultaneously on the display unit and thus it is hard to display a desired image.

### SUMMARY

Accordingly, one or more exemplary embodiments provide a display system, shutter 3D spectacles and a driving method thereof which selectively provides a 2D image and a 3D image.

The foregoing and/or other aspects may be achieved by providing shutter 3D spectacles which are used for a display apparatus displaying a left eye image and a right eye image alternately, the shutter 3D spectacles including a left eye shutter and a right eye shutter which are open and closed; a signal receiver which receives a synchronization signal from the display apparatus to operate the left eye shutter and the right eye shutter; and a controller which opens and closes the left eye shutter and the right eye shutter based on the synchronization signal, and the controller controlling the left eye shutter and the right eye shutter to operate the 3D spectacles in one of a 2D mode and a 3D mode, and opening, in the 2D mode, all of the left eye shutter and the right eye shutter corresponding to one of the left eye image and the right eye image being displayed, and closing all of the left eye shutter and the right eye shutter corresponding to the other one of the left eye image and the right eye image being displayed.

The controller may simultaneously open and close the left eye shutter and the right eye shutter in the 2D mode.

The controller may alternately open and close the left eye shutter and the right eye shutter in the 3D mode corresponding to the left eye image and the right eye image.

Frames of the 3D image displayed by the display apparatus may include the left eye image and the right eye image, and the controller may open all of the left eye shutter and the right eye shutter at the preset number of frames corresponding to one of the left eye image and the right eye image being displayed, and close all of the left eye shutter and the right eye shutter at the preset number of frames corresponding to the other one of the left eye image and the right eye image being displayed.

The shutter 3D spectacles may further include a mode changing means which is used to select the 2D mode and the 3D mode, wherein the controller may control the shutter 3D spectacles to operate in one of the 2D mode and the 3D mode corresponding to a user's manipulation of the mode changing means.

The controller may control the shutter 3D spectacles to operate in one of the 2D mode and the 3D mode based on information received from the display apparatus.

The controller may control the left eye shutter and the right eye shutter to be open for a longer time in the 2D mode than in the 3D mode.

The controller may supply a higher voltage in the 2D mode than in the 3D mode upon opening of the left eye shutter and the right eye shutter.

Another aspect is achieved by providing a display system including a display apparatus which alternately displays a left eye image and a right eye image; and at least one of 3D spectacles which includes a left eye shutter and a right eye shutter that are open and closed based on a synchronization signal output by the display apparatus and operates in one of a 2D mode and a 3D mode.

The 3D spectacles may open all of the left eye shutter and the right eye shutter in the 2D mode corresponding to one of the left eye image and the right eye image being displayed, and close all of the left eye shutter and the right eye shutter corresponding to the other one of the left eye image and the right eye image being displayed, and alternately opens and closes the left eye shutter and the right eye shutter in the 3D mode corresponding to the left eye image and the right eye image.

The display apparatus may output a mode signal including information about the 2D mode and the 3D mode to the 3D spectacles, and the 3D spectacles operate corresponding to the mode signal.

The display apparatus may output an identification signal for particular 3D spectacles out of a plurality of 3D spectacles to operate corresponding to the mode signal, which operates corresponding to the mode signal based on the identification signal.

Another aspect is achieved by providing a driving method of shutter 3D spectacles which include a left eye shutter and a right eye shutter that are open and closed, are used for a display apparatus alternately displaying a left eye image and a right eye image, the driving method including receiving a synchronization signal from the display apparatus to drive the left eye shutter and the right eye shutter; selecting one of a 2D mode and a 3D mode; and opening in the 2D mode all of the left eye shutter and the right eye shutter corresponding to one of the left eye image and the right eye image being displayed, and closing in the 2D mode all of the left eye shutter and the right eye shutter corresponding to the other one of the left eye image and the right eye image being displayed.

The left eye shutter and the right eye shutter may be open and closed simultaneously in the 2D mode.

The left eye shutter and the right eye shutter may be open and closed alternately in the 3D mode corresponding to the left eye image and the right eye image.

Frames of the 3D image displayed by the display apparatus may include the left eye image and the right eye image, and the left eye shutter and the right eye shutter are open at the preset number of frames corresponding to one of the left eye image and the right eye image being displayed, and the left eye shutter and the right eye shutter are closed at the preset number of frames corresponding to the other one of the left eye image and the right eye image being displayed.

The driving method may include receiving information from the display apparatus, wherein the selecting one of the 2D mode and the 3D mode includes selecting one of the 2D mode and the 3D mode based on the received information.

The left eye shutter and the right eye shutter may be open for a longer time in the 2D mode than in the 3D mode.

A higher voltage may be supplied in the 2D mode than in the 3D mode upon opening the left eye shutter and the right eye shutter.

Another aspect is achieved by providing a driving method of a display system including outputting a synchronization signal from a display apparatus which alternately displays a left eye image and a right eye image; and operating at least one of 3D spectacles including a left eye shutter and a right eye shutter that are open and closed, in one of a 2D mode and a 3D mode based on the synchronization signal.

The outputting the synchronization signal may include outputting a mode signal including information about the 2D mode and the 3D mode from the display apparatus; and the operating the 3D spectacles includes operating the 3D spectacles corresponding to the mode signal.

The outputting the synchronization signal may include outputting an identification signal for particular 3D spectacles out of the plurality of 3D spectacles to operate corresponding to the mode signal; and the plurality of 3D spectacles operates corresponding to the mode signal based on the identification signal.

### BRIEF DESCRIPTION OF THE DRAWINGS

The above and/or other aspects will become apparent and more readily appreciated from the following description of the exemplary embodiments, taken in conjunction with the accompanying drawings, in which:

FIG. 1 is a block diagram of a display system according to an exemplary embodiment;

FIG. 2 illustrates an operation of shutter 3D spectacles of the display system according to the exemplary embodiment;

FIG. 3 illustrates an operation of the display system according to the exemplary embodiment;

FIG. 4 illustrates a user interface (UI) to select a 3D spectacles operation mode of a display apparatus of the display system according to the exemplary embodiment;

FIG. 5 is a flowchart of the operation of the shutter 3D spectacles of the display system according to the exemplary embodiment; and

FIG. 6 is a flowchart of the operation of the display system according to an exemplary embodiment.

### DETAILED DESCRIPTION OF EXEMPLARY EMBODIMENTS

Below, exemplary embodiments will be described in detail with reference to accompanying drawings so as to be easily realized by a person having ordinary knowledge in the art. The exemplary embodiments may be embodied in various forms without being limited to the exemplary embodiments set forth herein. Descriptions of well-known parts are omitted for clarity, and like reference numerals refer to like elements throughout. Expressions such as "at least one of," when preceding a list of elements, modify the entire list of elements and do not modify the individual elements of the list.

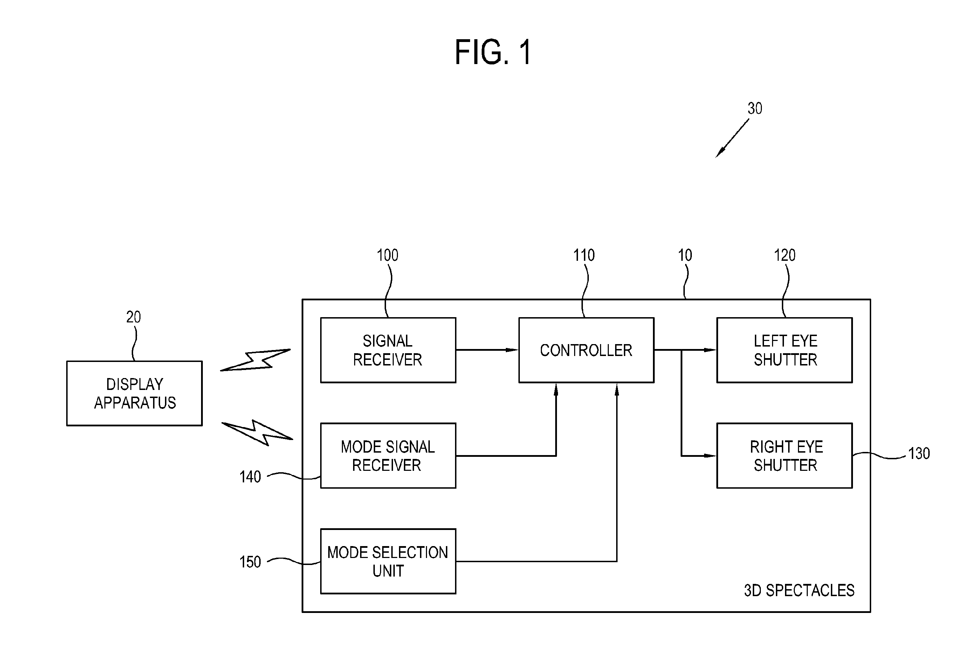

FIG. 1 is a block diagram of a display system 30 according to an exemplary embodiment. Referring to FIG. 1, the display system 30 according to the present exemplary embodiment may include a display apparatus 20 and shutter 3D spectacles 10.

The display apparatus 20 may display a 3D image by alternately displaying a left eye image and a right eye image and may output a synchronization signal to operate the 3D spectacles 10 corresponding to the left and right eye images.

The shutter 3D spectacles 10 may include a signal receiver 100, a left eye shutter 120, a right eye shutter 130 and a controller 110. The shutter 3D spectacles 10 may further include a mode signal receiver 140 and a mode selection unit 150. In another exemplary embodiment, the mode signal receiver 140 may be a mode signal transceiver 140.

The signal receiver 100 receives a synchronization signal from the display apparatus 20 to drive the left eye shutter 120 and the right eye shutter 130. The synchronization signal may be transmitted by using an infrared ray (IR) signal, a radio frequency (RF) signal, or any other light not visible to the human eye. The signal receiver 100 transmits the received synchronization signal to the controller 110.

To ensure that a user views a 3D image, the left eye shutter 120 and the right eye shutter 130 are open and closed corresponding to a left eye image and a right eye image displayed on the display apparatus 20, and operate on the basis of the synchronization signal received from the signal receiver 100.

When the display apparatus 20 outputs a mode signal to select an operation mode of the 3D spectacles 10, the mode signal receiver 140 receives the mode signal and transmits the signal to the controller 110. When the display apparatus 20 outputs an identification signal to identify the 3D spectacles 10, the mode signal receiver 140 transmits the received identification signal to the controller 110. The identification signal identifies a particular 3D spectacles 10 out of a plurality of 3D spectacles 10, and is for a user using the particular 3D spectacles to view a desired image other than the 3D image viewed by a plurality of users through the plurality of 3D spectacles 10.

If a user selects the operation mode in the 3D spectacles 10, the mode selection unit 150 transmits the selected operation mode to the controller 110. Further, in an exemplary embodiment, the 3D spectacles may communicate the selected operation mode to the display apparatus 20. In one exemplary embodiment, the selected operation mode is transmitted from the 3D spectacles to the display apparatus 20 through the mode signal transceiver 140 in lieu of the mode signal receiver 140.

The mode signal receiver 140 is used to select the operation mode of the 3D spectacles 10 of the display apparatus 20, and the mode selection unit 150 is used to directly select the operation mode from the 3D spectacles 10, not through the display apparatus 20. The 3D spectacles 10 according to the present exemplary embodiment may include the mode signal receiver 140 or the mode selection unit 150, or both.

The controller 110 opens and closes the left eye shutter 120 and the right eye shutter 130 according to the synchronization signal transmitted by the signal receiver 100. The 3D spectacles 10 according to the present exemplary embodiment may operate in the 2D mode and the 3D mode. A particular mode may be selected through the mode signal receiver 140 or the mode selection unit 150, and the controller 110 controls the 3D spectacles 10 to operate in the selected mode.

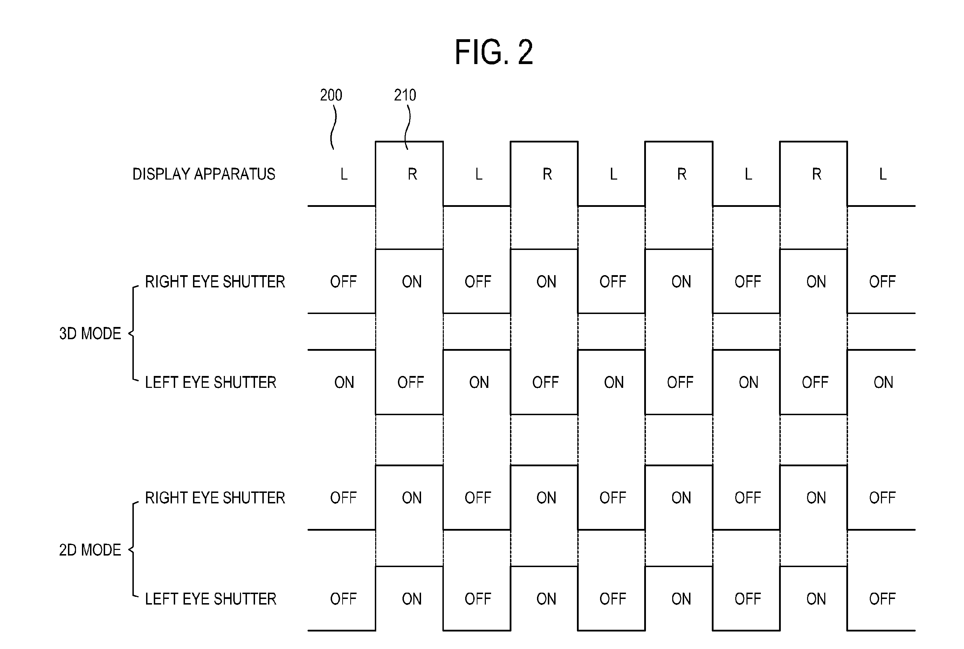

FIG. 2 illustrates an operation of the shutter 3D spectacles 10 of the display system 30 according to the exemplary embodiment. Referring to FIG. 2, if the 3D mode is selected, the controller 110 opens the left eye shutter 120 and closes the right eye shutter 130 when a left eye image 200 is displayed on the display apparatus 20. The controller 110 opens the right eye shutter 130 and closes the left eye shutter 120 when a right eye image 210 is displayed on the display apparatus 20. If a 2D mode is selected, the controller 110 opens the left eye shutter 120 and the right eye shutter 130 when one of the left eye image 200 and the right eye image 210 is displayed. Meanwhile, the controller 110 closes the left eye shutter 120 and the right eye shutter 130 when the other one of the left eye image 200 and the right eye image 210 is displayed. The left eye shutter 120 and the right eye shutter 130 may be open or closed simultaneously. FIG. 2 illustrates the left eye shutter 120 and the right eye shutter 130 open simultaneously when the right eye image 210 is displayed, and closed simultaneously when the left eye image 200 is displayed.

If the identification signal is output and received by the mode signal receiver 140, the controller 110 may identify the identification signal and determine whether to change the mode by applying the mode signal output by the display apparatus 20. To improve brightness, the controller 110 may control the left eye shutter 120 and the right eye shutter 130 to be open for a longer time in the 2D mode than in the 3D mode. If the left eye shutter 120 and the right eye shutter 130 are open in the 2D mode, the controller 110 may supply a higher voltage than in the 3D mode.

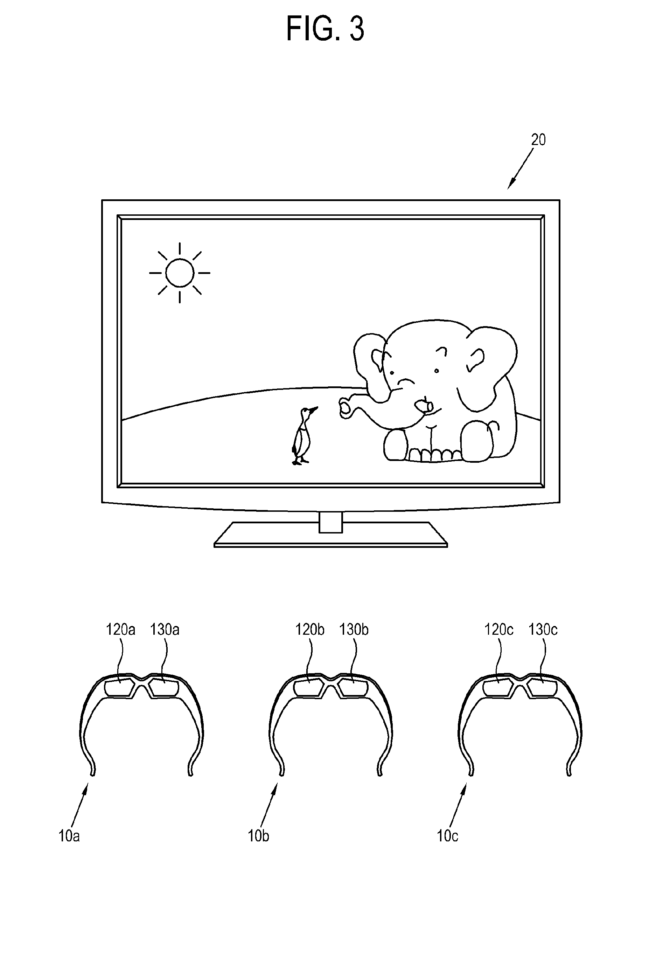

FIG. 3 illustrates an operation of the display system 30 according to the exemplary embodiment. FIG. 3 illustrates a plurality of 3D spectacles 10 and a mode is selected through the mode signal receiver 140 in the 3D spectacles 10.

Referring to FIG. 3, if the display apparatus 20 displays a 3D image and a plurality of users views the 3D image by using first 3D spectacles 10a, second 3D spectacles 10b and third 3D spectacles 10c, all of the 3D spectacles 10a, 10b and 10c alternately open and close left eye shutters 120a, 120b and 120c and right eye shutters 130a, 130b and 130c based on the synchronization signal output by the display apparatus 20.

If a user who uses the first 3D spectacles 10a desires to view a 2D image, a user changes an operation mode of the first 3D spectacles 10a of the display apparatus 20 to the 2D mode. If the mode is changed, the display apparatus 20 outputs an identification signal to identify the first 3D spectacles 10a and a signal representing the 2D mode. Any signal output by the display apparatus 20 may be transmitted to all of the 3D spectacles 10a, 10b and 10c. As the identification signal is output, however, the 3D spectacles 10a, 10b and 10c may determine whether the signal is applicable by using the identification signal. In the present exemplary embodiment, the display apparatus 20 outputs the identification signal for the first 3D spectacles 10a so the second and third 3D spectacles 10b and 10c continue to operate in the 3D mode without any mode change while the first 3D spectacles 10a is changed to the 2D mode. Then, while the display apparatus 20 displays the 3D image, a user may selectively view the 3D image and the 2D image.

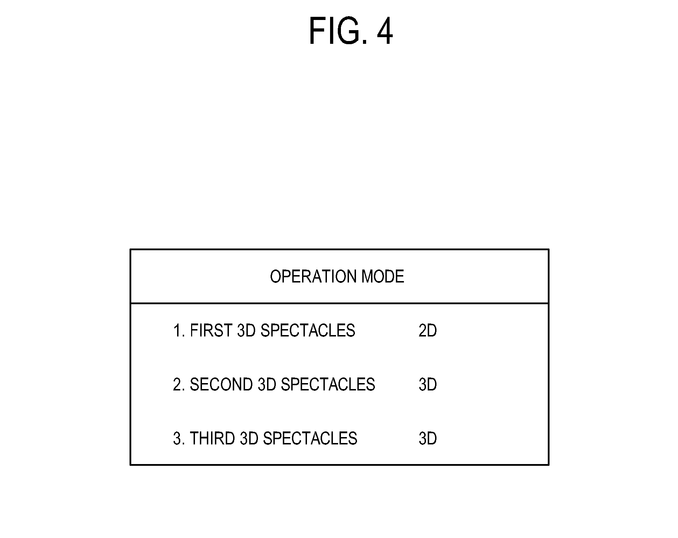

FIG. 4 illustrates a user interface (UI) to select the operation mode of the 3D spectacles 10 in the display apparatus 20 of the display system 30 according to the exemplary embodiment.

Referring to FIG. 4, if a plurality of 3D spectacles 10 is provided, all of the 3D spectacles 10 may be registered with the display apparatus 20. If a user desires to change the operation mode, the display apparatus 20 displays all of the 3D spectacles 10 and the operation mode. If a user selects particular 3D spectacles 10 and changes the operation mode of the selected 3D spectacles 10, the display apparatus 20 outputs the identification signal to identify the 3D spectacles 10 and the signal representing the operation mode of the 3D spectacles 10. FIG. 4 illustrates the first 3D spectacles 10 whose mode is changed from the 3D mode to the 2D mode among the first to third 3D spectacles 10.

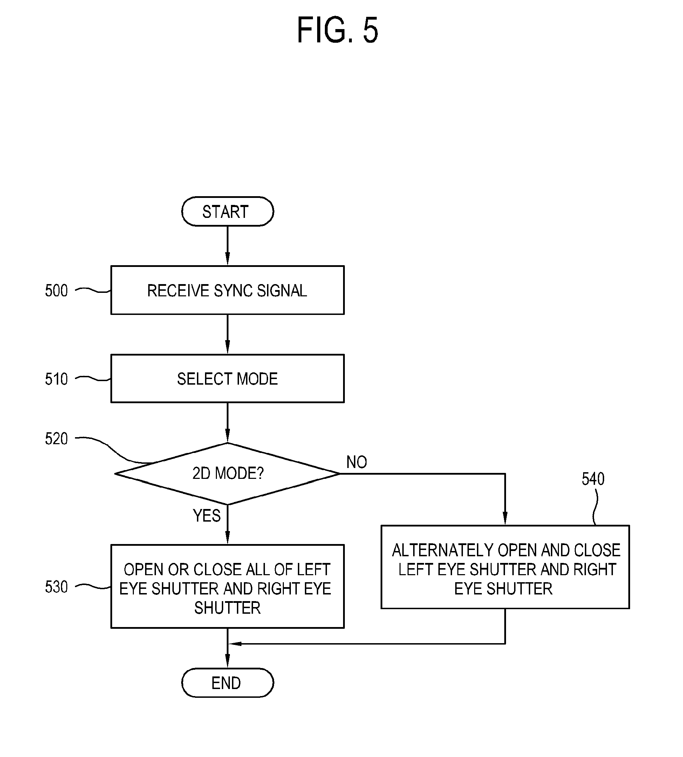

FIG. 5 is a flowchart of the operation of the shutter 3D spectacles 10 of the display system 30 according to the exemplary embodiment.
Referring to FIG. 5, the display apparatus 20 which alternately displays a left eye image and a right eye image outputs the synchronization signal to 3D spectacles 10 (S500). If one of the 2D mode and the 3D mode is selected (S510), the 3D spectacles 10 operate in the selected mode. If the 2D mode is selected (YES at operation S520), the controller 110 opens all of the left eye shutter 120 and the right eye shutter 130 corresponding to one of the left eye image and the right eye image which is being displayed, and closes all of the left eye shutter 120 and the right eye shutter 130 corresponding to the other one of the left eye image and the right eye image which is being displayed (S530). If the 3D mode is selected (NO at operation S520), the controller 110 alternately opens and closes the left eye shutter 120 and the right eye shutter 130 corresponding to the left eye image and the right eye image (S540).

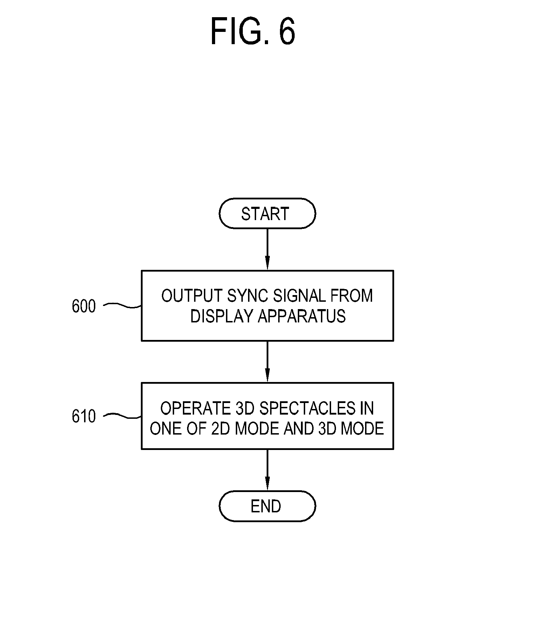

FIG. 6 is a flowchart of the operation of the display system 30 according to the exemplary embodiment.

Referring to FIG. 6, if the display apparatus 20 which alternately displays the left eye image and the right eye image outputs the synchronization signal to 3D spectacles 10 (S600), at least one of the 3D spectacles 10 including the left eye shutter 120 and the right eye shutter 130 that are open and closed operates in either the 2D mode or the 3D mode based on the synchronization signal (S610).

As described above, a display system, shutter 3D spectacles and a control method thereof according to the exemplary embodiments operates the 3D spectacles selectively in a 2D mode and a 3D mode and provides a 2D image for a user even when a 3D image is being displayed and vice versa.

Also, a display system, shutter 3D spectacles and a control method thereof according to the exemplary embodiments provides a 2D image for a user who desires to view the 2D image even when a plurality of users views a 3D image by using a plurality of 3D spectacles.

Although a few exemplary embodiments have been shown and described, it will be appreciated by those skilled in the art that changes may be made in these exemplary embodiments without departing from the principles and spirit of the invention, the scope of which is defined in the appended claims and their equivalents.

## Claims

1. A display system comprising:
a display apparatus which alternately displays a left eye image and a right eye image; and
at least one pair of spectacles which comprises a left eye shutter and a right eye shutter that are open and closed based on a synchronization signal output by the display apparatus and operates in one of a two-dimensional (2D) mode and a three-dimensional (3D) mode.

2. The display system according to claim 1, wherein the display apparatus outputs a mode signal comprising information about the 2D mode and the 3D mode to the pair of spectacles, and the pair of spectacles operate corresponding to the mode signal.

3. The display system according to claim 1, wherein the at least one of the pair of spectacles are a plurality of pairs of spectacles, wherein the display apparatus outputs an identification signal for one of a plurality of pairs of spectacles to operate corresponding to the mode signal.

4. The display system according to claim 1, wherein the pair of spectacles comprising:
a left eye shutter and a right eye shutter which are open and closed;
a signal receiver which receives a synchronization signal from the display apparatus to operate the left eye shutter and the right eye shutter; and
a controller which opens and closes the left eye shutter and the right eye shutter based on the synchronization signal, wherein
the controller controls the left eye shutter and the right eye shutter to operate the viewing device in one of a two-dimensional (2D) mode and a three-dimensional (3D) mode.

5. The display system according to claim 4, wherein the controller open both the left eye shutter and the right eye shutter in the 2D mode for one of the left eye image and the right eye image being displayed, and closes both the left eye shutter and the right eye shutter for another of the left eye image and the right eye image being displayed, and alternately opens and closes the left eye shutter and the right eye shutter in the 3D mode according to the left eye image and the right eye image being displayed.

6. The display system according to claim 4, further comprising a mode changing means which is used to select one of the 2D mode and the 3D mode, wherein
the controller controls the viewing device to operate in one of the 2D mode and the 3D mode corresponding to a user's manipulation of the mode changing means.

7. The display system according to claim 4, wherein the controller controls the viewing device to operate in one of the 2D mode and the 3D mode based on information received from the display apparatus.

8. The display system according to claim 4, wherein the controller controls the left eye shutter and the right eye shutter to be open for a time in the 2D mode that is longer than a time in the 3D mode.

9. The display system according to claim 4, wherein the controller supplies a voltage in the 2D mode that is higher than a voltage in the 3D mode upon opening of the left eye shutter and the right eye shutter.

10. A driving method of a display system comprising:
outputting a synchronization signal from a display apparatus which alternately displays a left eye image and a right eye image; and
operating at least one pair of spectacles including a left eye shutter and a right eye shutter that are open and closed, in one of a two-dimensional (2D) mode and a three-dimensional (3D) mode based on the synchronization signal.

11. The driving method according to claim 10, wherein the outputting the synchronization signal comprises outputting a mode signal comprising information about the 2D mode and the 3D mode from the display apparatus; and
the operating the at least one pair of spectacles comprises operating the at least one pair of spectacles according to the mode signal.

12. The driving method according to claim 10, wherein the at least one pair of spectacles includes a plurality of pairs of spectacles, wherein the outputting the synchronization signal comprises outputting an identification signal for one of the plurality of pairs of spectacles to operate corresponding to the mode signal; and
the plurality of pairs of spectacles operates corresponding to the mode signal based on the identification signal.

13. The driving method according to claim 10, wherein the operating comprising:
receiving a synchronization signal from the display apparatus to drive the left eye shutter and the right eye shutter; and
selecting one of a two-dimensional (2D) mode and a three-dimensional (3D) mode.

14. The driving method according to claim 13, wherein both the left eye shutter and the right eye shutter are simultaneously open or simultaneously closed in the 2D mode, and the left eye shutter and the right eye shutter are open and closed alternately in the 3D mode according to the left eye image and the right eye image being displayed.

15. The driving method according to claim 13, further comprising receiving information from the display apparatus, wherein the selecting one of the 2D mode and the 3D mode comprises selecting one of the 2D mode and the 3D mode based on the received information.
